(19) Europäisches Patentamt
European Patent Office
Office européen des brevets

(11) Veröffentlichungsnummer: **0 261 516 B1**

(12) **EUROPÄISCHE PATENTSCHRIFT**

(45) Veröffentlichungstag der Patentschrift: **11.11.92**

(51) Int. Cl.$^5$: **C02F 3/30**

(21) Anmeldenummer: **87113293.2**

(22) Anmeldetag: **11.09.87**

(54) **Verfahren zur kontinuierlichen mikrobiologischen Denitrifikation von Grundwasser.**

(30) Priorität: **26.09.86 DE 3632711**

(43) Veröffentlichungstag der Anmeldung:
**30.03.88 Patentblatt 88/13**

(45) Bekanntmachung des Hinweises auf die Patenterteilung:
**11.11.92 Patentblatt 92/46**

(84) Benannte Vertragsstaaten:
**AT BE CH ES FR GB GR IT LI LU NL SE**

(56) Entgegenhaltungen:
**EP-A- 0 066 898**
**EP-A- 0 086 863**
**DE-A- 3 121 395**
**US-A- 3 788 398**
**US-A- 4 392 530**
**US-A- 4 640 355**

**DVGW-SCHRIFTENREIHE WASSER, Nr. 105, 1984, Seiten 179-192, Eschbom, DE; U. ROHMANN: "Forschungsarbeiten zur Denitrifikation im Untergrund"**

**IDEM**

**JOURNAL WPCF, Band 49, Nr. 5, Mai 1977, Seiten 855-857; I. MASON: "Methande as a carbon source in biological denitrification"**

(73) Patentinhaber: **Gelsenwasser AG**
**Balkenstrasse 26**
**W-4650 Gelsenkirchen(DE)**

(72) Erfinder: **Heymann, Ekkehard, Dr. Dipl.-Chem.**
**Saiger Strasse 10**
**W-7820 Titisee/Neustadt(DE)**
Erfinder: **Polzenberg, Gerd, Dipl.-Ing.**
**Moselstrasse 123**
**W-5628 Heiligenhaus(DE)**

(74) Vertreter: **König, Reimar, Dr.-Ing. et al**
**Patentanwälte Dr.-Ing. Reimar König**
**Dipl.-Ing. Klaus Bergen Wilhelm-Tell-Strasse 14 Postfach 260162**
**W-4000 Düsseldorf 1(DE)**

**EP 0 261 516 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur kontinuierlichen mikrobiologischen Denitrifikation von Grundwasser mittels Erdgas, insbesondere Methan, und eine Vorrichtung zur Durchführung des Verfahrens.

Die derzeitige gesetzlich zulässige Höchstkonzentration von 90 mg $NO_3$ je Liter im Trinkwasser wird demnächst auf 50 mg $NO_3$ je Liter herabgesetzt. Der EG-Richtwert liegt sogar noch niedriger, bei 25 mg $NO_3$ je Liter. Für die Wasserwerke wird es somit notwendig, Maßnahmen zur Verringerung überhöhter Nitratkonzentrationen zu ergreifen, um einer Stillegung zu entgehen. Besonders hoch ist der Nitratgehalt des Grundwassers in der Nähe von landwirtschaftlich intensiv genutzten Flächen, auf die große Mengen Dünger und Gülle aufgebracht werden.

Das Nitrat selbst ist zwar in den bisher zulässigen Konzentrationen nicht giftig, jedoch können seine Umwandlungsprodukte wie Nitrit und Nitrosaminverbindungen zu gesundheitlichen Schäden führen. Auch der durch das Nitrat bewirkte Härteanstieg des Grundwassers ist als wirtschaftlich nachteilig anzusehen.

Bekannte Verfahren zur Denitrifikation des Trinkwassers beruhen auf einem Ionenaustausch, einer Umkehrosmose oder einem mikrobiologischen Abbau in oberiridischen Anlagen.

Bei den mikrobiologischen Verfahren werden oberirdisch arbeitende Festbett- oder Fließbettreaktoren verwendet, bei denen entweder Sand oder andere Stoffe mit körniger Struktur als Trägermaterial für eine Biomasse dienen. Da sich die Biomasse ständig vermehrt und die Wirkung der Reaktoren beeinträchtigt, sind für Festbettreaktoren Spülvorrichtungen erforderlich, um die gebildete Biomasse von Zeit zu Zeit aus dem Reaktor zu entfernen. Bei Fließbettreaktoren wird der Bakterienüberschuß kontinuierlich im Aufstrom ausgeschwemmt und danach separiert. Zusätzlich kann noch eine Nachaufbereitung des den Nitrifizierungsreaktor verlassenden Wassers durch Belüften und Nachfiltrieren erforderlich sein.

In der DVGW-Schriftenreihe "Wasser" Nr. 105, Eschborn 1984, Seiten 188 bis 190 ist ein Verfahren zum unterirdischen Aufbreiten von nitratreichem Grundwasser durch Infiltration von aufbereitetem Abwasser oder mit gelöstem Erdgas beschrieben. Bei diesem Verfahren wird nitratreiches Grundwasser mit einem Mischwasser aus biologisch gereinigtem und nachaufbereitetem Abwasser und Grundwasser oder aus oberirdisch mit methanreichem Erdgas versetztes Grundwasser durch Injektion in situ behandelt. Die im Boden bzw. im Grundwasser vorhandenen autotrophen und heterotrophen Mikroorganismen reduzieren das Nitrat zu Stickstoff und Wasser; sie verwenden den Nitrat-Sauerstoff zur Oxidation von Wasserstoff und Kohlenstoff. Zwar ist mit diesem Verfahren ein Abbau des vorhandenen Nitrats verbunden, jedoch tritt nach kurzer Zeit ein Verstopfen des Versicherungsbrunnens durch die den Sickervorgang blockierenden Bakterienschleime ein. Ein Verstopfen läßt sich nicht wieder rückgängig machen, so daß auf Dauer mit diesem Verfahren ein störungsfreier Betrieb nicht möglich ist. Hinzu kommt, daß der apparative Aufwand, um die gasförmigen Reaktanden in einem Flüssigkeitsteilstrom unter Druck und unter Zuhilfenahme eines herkömmlichen Absorbers zu lösen, verhältnismäßig hoch ist. Auch Untersuchungen unter ausschließlicher Anwendung von Erdgas zeigten ein ähnliches Ergebnis.

Der Erfindung liegt daher die Aufgabe zugrunde, ein Verfahren und eine Vorrichtung zur kontinuierlichen mikrobiologischen Denitrifikation von Grundwasser mittels Erdgas, insbesondere Methan zu schaffen, das mit einem geringen apparativen Aufwand auskommt und über lange Zeiträume wirksam ist, ohne daß es zu Verstopfungen im Bereich des Grundwasserleiters kommt.

Gelöst wird diese Aufgabe dadurch, daß das Erdgas atromaufwärts von der Grundwasserentnahmestelle direkt in den Grundwasserleiter eingeleitet wird. Dies kann intermittierend geschehen, um sowohl Erdgas bzw. Methan zu sparen und gleichzeitig auch die sich vor Ort bildende Biomasse zu begrenzen. Diese Biomasse dient als Substrat für heterotrophe/organotrophe Bakterien für den Nitratabbau.

Bei Versuchen hat sich überraschenderweise herausgestellt, daß das Einspeisen von Erdgas bzw. Methan die natürlich ablaufende Denitrifikation im Grundwasser in ihrer Wirkung verstärkt, ohne daß es im Bereich der Einspeisungsstelle zum Entstehen eines zu Verstopfungen führenden Bakterienschleims kommt. Das direkte Einspeisen von Erdgas in den Grundwasserleiter führt im Vergleich zu anderen bekannten Verfahren zu sehr niedrigen Betriebskosten; es entstehen darüber hinaus keine umweltbelastenden Reaktionsprodukte.

Der Wirkungsmechanismus im Grundwasser läßt sich global durch die folgenden chemischen Bilanzgleichungen beschreiben:

$$CH_4 + 4\ O_2 = HCO_3^- + H^+ + H_2O$$

$$5\ CH_4 + 8\ NO_3^- = 4\ N_2 + 5\ HCO_3^- + 6\ H_2O + 3\ OH^-$$

$$Fe^{2+} \xrightarrow{O_2 + H_2O} Fe(OH)_3$$

Dabei ist zu berücksichtigen, daß die für den Abbau des Nitrates verantwortlichen Mikroorganismen Aerobier sind, die nur im ansonsten anaeroben Milieu den Sauerstoff des Nitrations veratmen und dabei des Methan des Erdgases als Energierquelle benutzen.

Durch diese Reaktion steigt der pH-Wert des Grundwassers an, was zu unerwünschten Kalkausfällungen führen kann. Gleichzeitig entsteht in unerwünscht starkem Umfang Biomasse aus den für den Abbau des Nitrats verantwortlichen Mikroorganismen. Um den pH-Wert zu verringern und eine Verschiebung des Bakterienstoffwechsels in Richtung einer Unterdrückung des Bakterienwachstums im Bereich der Eintragstelle zu erreichen und damit Verstopfungen zu vermeiden, wird vorteilhafterweise gasförmiges Kohlenstoffdioxid zusammen mit dem Erdgas in das Grundwasser eingeleitet. Auf diese Weise lassen sich sowohl ein bestimmte Redoxpotential einhalten als auch nachteilige Auswirkungen auf das Kalk-Kohlensäure- System des Grundwasserleiters vermeiden.

Falls der Sauerstoffgehalt im Grundwasser zu gering ist, kann Sauerstoff stromaufwärts und/oder stromabwärts von der Einspeisestelle für Erdgas vor der Grundwasserentnahmestelle in das Grundwasser eingeleitet werden. Auf diese Weise bildet sich stromauf von der anaeroben Stufe eine aerobe Stufe.

Sauerstoff und Erdgas können auch getrennt voneinander an derselben Stelle eingespeist und an der Einspeisestelle im Grundwasser miteinander vermischt werden.

Bei der nach den obigen Gleichungen ablaufenden Reaktion entwickeln sich aufgrund des Nährstoffangebotes Massenansammlungen von Mikroorganismen, bei denen es sich um eine Biomasse handelt. Die Grundsubstanz dieser Biomasse besteht überwiegend aus Eiweißstoffen. Die Biomasse kann sich allerdings nur zufriedenstellend entwickeln, wenn für die Stoffwechselvorgänge ein ausreichender Anteil an Phosphationen zur Verfügung steht. Daher kann Phosphatlösung für sich und/oder mit dem Sauerstoff in das Grundwasser eingeleitet worden. Stromauf von der Entnahmestelle, d.h. zwischen der Einspeisestelle für Erdgas und der Entnahmestelle kann auch gasförmiger Sauerstoff eingeleitet werden, falls sich in der Einfahrphase unbefriedigende Gehalte an Eisen, Mangan und Nitrit ergeben.

Des weiteren kann auch eine Nährlösung, beispielsweise aus Phosphaten, Spurenstoffen und Vitaminen für sich oder im Gemisch mit einem oder mehreren der Gase in das Grundwasser eingeleitet werden, um auf diese Weise ein optimales Verhältnis von C : N : P zu gewährleisten. Vorzugsweise wird das Verhältnis von C : N : P auf 100 : 10 : 1 eingestellt bzw. gehalten; dabei wird die Kohlenstoffkonzentration mit Hilfe des Erdgases und/oder des Kohlendioxyds sowie aus zerfallener Biomasse und die Konzentration des Phosphors mit Hilfe der Nährlösung bzw. der Phosphate eingestellt, während die Stickstoffkonzentration durch den Nitratgehalt des Grundwassers vorgegeben ist. Vorzugsweise beträgt die Verweilzeit der in den Grundwasserleiter eingeleiteten Gase bis zur Entnahmestelle mindestens 4,5 Stunden.

Zur Durchführung des erfindungsgemäßen Verfahrens kann eine Vorrichtung verwendet werden, die aus einer Gaslanze mit einer gasdichten, druckfesten Kappe und Gasanschlüssen besteht. Diese Gaslanze kann auf beliebige Weise bis zum Grundwasserleiter in den Boden eingebracht werden und erlaubt es, das Erdgas, das Kohlenstoffdioxid und den Sauerstoff sowie gegebenenfalls die Phosphatlösung mit dem erforderlichen Druck in das Grundwasser hineinzupressen.

Um ein blasenloses Einleiten der Gase in das Grundwasser zu ermöglichen, kann an der Austrittsöffnung der Gaslanze ein Membranfilter, vorzugsweise eine Sintermetallplatte angeordnet sein.

Die Erfindung wird nachstehend anhand von in der Zeichnung dargestellten Ausführungsbeispielen des näheren erläutert. In der Zeichnung zeigen:

Fig. 1 eine Vorrichtung mit zwei Einspeisebrunnen und

Fig. 2 eine Vorrichtung zum flächendeckenden Einspeisen der Gase und Lösungen.

In einen Grundwasserleiter 12 ragen ein Kontrollpegel 1 im Bereich eines Einspeisebrunnens 2 für Sauerstoff und gegebenenfalls für Phosphatlösung sowie eines weiteren Einspeisebrunnens 6 für Methan und Kohlenstoffdioxid sowie ein weitere Kontrollpegel 11 im Bereich eines Entnahmebrunnens 9. Die Grundwasserfließrichtung verläuft entsprechend dem Pfeil 14 vom Kontrollpegel 1 zum Entnahmebrunnen 9.

Die Einspeisebrunnen 2 und 6 sind als Gaslanzen ausgebildet, deren in den Grundwasserleiter 12 geführten Enden mit einem Membranfilter in Form einer Sintermetallplatte 3 versehen sind.

Die aus dem Boden herausragenden Enden der Einspeisebrunnen 2, 6, 15 sind mit einer gasdichten, druckfesten Kappe 4 verschlossen, die Auschlüsse für die einzuleitenden Gase und - hier nicht dargestellt - für die Phosphatlösung aufweisen. Die Einspeisebrunnen 2, 15, sind mit einem Sauerstoffbehälter 5 über die erforderlichen Armaturen verbunden, um Sauerstoff mit dem benötigten Druck und der benötigten Menge in den Grundwasserleiter einzupressen. Der Einspeisebrunnen 6 ist entsprechend mit einem Methanbehälter 7 und einem Kohlenstoffdioxidbehälter 8 verbunden.

Im Entnahmebrunnen 9 ist eine Pumpe 10 angeordnet, die das nitratfreie bzw. nitratreduzierte Grundwasser abpumpt und über eine Reinwasserleitung 13 abfördert.

Der Einspeisebrunnen 2 für Sauerstoff ist stromauf vom Einspeisebrunnen 6 für Methan und Kohlenstoffdioxid und dieser wiederum stromauf vom Entnahmebrunnen 9 angeordnet.

Zwischen dem Entnahmebrunnen 9 und den Einspeisebrunnen 2, 6 bildet sich gleichsam ein unterirdischer Bioreaktor, den das Grundwasser horizontal in Richtung des Pfeils 14 durchströmt.

Das durch Zugabe von Sauerstoff, Erdgas, Kohlenstoffdioxid und gegebenenfalls Phosphatlösung und nach Ablauf der Denitrifizierung erneut mit Sauerstoff konditionierte Grundwasser transportiert dabei innerhalb des Bioreaktors selbst die Nahrungs- und Pufferstoffe, die für die innerhalb der Reaktionsstrecke im Grundwasserleiter ablaufende Umsetzung von Nitrat zu Stickstoff und Wasser erforderlich sind. Hierbei entsteht ein in seiner mikrobiologischen Aktivität spezifisch wirksamer, unterirdischer Bioreaktor, der keines Spülens durch eine periodische Wasserentnahme aus den Einspeisebrunnen 2, 6 bedarf. Auch bedarf das auch dem Entnahmebrunnen 9 geförderte Grundwasser keiner Nachaufbereitung, um Reaktionsendprodukte der Denitrifizierung zu entfernen.

Um die Denitrifizierung zu überwachen, brauchen nur die auf das System wirkenden Einflüsse wie Wassertemperatur, Wasserqualität, Fließgeschwindigkeit und Fließrichtung des Grundwassers sowie der geologische Aufbau des Grundwasserleiters ermittelt und überwacht zu werden. Ferner ist es erforderlich, die Einsatzpartner und die Reaktionsprodukte zu bestimmten. Es sollten daher pH-Wert, Gesamthärte, Säure- und Basenkapazität, Nitrat-, Nitrit-, Eisen-, Mangan- und Sauerstoffgehalte und die Keimzahlen vor und nach der Behandlung überwacht werden.

Um das Grundwasser flächendeckend mit den Reaktanden zu versorgen, sind eine Vielzahl von Einspeisebrunnen bzw. Lanzen 16 zum Einspeisen eines Gemischs aus Gas, Nährlösung und Wasser, beispielsweise fünf bis dreißig, jeweils im Abstand voneinander angeordnet, die in unterschiedlicher Höhe in die Grundwasserschicht eintauchen können. Jede Lanze 16 ist dabei über ein eigenes pneumatisch oder elektrisch gesteuertes Dosierventil 17 an ein Mischrohr 18 angeschlossen, das über Zuleitungen 19, 20, 21 mit Gas, Nährlösung oder Wasser versorgt wird. Die einzelnen Dosierventile werden über eine Steuereinheit 22 und Steuerleitungen 23 betätigt. In dem Mischrohr 18 lassen sich durch eine entsprechende Dosierung der Reaktanden unterschiedliche Mischungsverhältnisse einstellen. Die Gase werden über die Leitung 19 als Gemisch oder über nicht dargestellte Einzelleitungen in das Mischrohr 18 eingespeist. Da jedoch Erdgas Kohlendioxyd und Sauerstoff nicht gemeinsam eingespeist werden können, weil es sonst zu einer Explosion kommen kann, kann über die Gasleitung 19 entweder nur Erdgas und Kohlendioxyd oder Sauerstoff in das Mischrohr 18 eingespeist werden. Für das Einspeisen von Sauerstoff ist daher stets eine separate Vorrichtung der in Fig. 2 dargestellten Art erforderlich.

Die einzelnen Lanzen 16 Können gleichmaßig oder einzeln bzw. nacheinander, jedoch mit einer je Zeiteinheit gleichen Menge der Reaktanden beschickt werden.

Insgesamt erlaubt das erfindungsgemäße Verfahren, im Grundwasserstrom mit einfachen Mitteln einen Bioreaktor zu schaffen, der keines Rückspülens durch eine periodische Wasserentnahme an der Einspeisestelle bedarf. Von besonderem Vorteil ist es des weiteren, daß das aus dem Entnahmebrunnen geförderte Grundwasser keine Nachaufbereitung erfordert, um etwaige Reaktionsprodukte der Denitrifikation zu entfernen.

## Patentansprüche

1. Verfahren zur kontinuierlichen mikrobiologischen Denitrifikation von Grundwasser mittels Erdgas, dadurch gekennzeichnet, daß das Erdgas stromaufwärts von der Grundwasserentnahmestelle direkt in den Grundwasserleiter eingeleitet wird.

2. Verfahren nach Anspruch 1, dadurch gekennzeichnet, daß zusammen mit dem Erdgas Kohlendioxid eingeleitet wird.

3. Verfahren nach Anspruch 1 oder 2, dadurch gekennzeichnet, daß Sauerstoff stromaufwärts und/oder stromabwärts von der Einspeisestelle für Erdgas vor der Grundwasserentnahmestelle eingeleitet wird.

4. Verfahren nach Anspruch 1 oder 2, dadurch gekennzeichnet, daß stromauf von der Grundwasserentnahmestelle Sauerstoff und Erdgas an einer gemeinsamen Einspeisestelle getrennt in das Grundwasser eingeleitet und an der Einspeisestelle im Grundwasser miteinander vermischt werden.

5. Verfahren nach einem der Ansprüche 1 bis 4, dadurch gekennzeichnet, daß das Erdgas intermittierend eingeleitet wird.

6. Verfahren nach einem der Ansprüche 1 bis 5, dadurch gekennzeichnet, daß Phosphatlösung für sich und/oder mit dem Sauerstoff in das Grundwasser eingeleitet wird.

7. Verfahren nach einem der Ansprüche 1 bis 6, dadurch gekennzeichnet, daß eine Nährlösung für sich oder im Gemisch mit einem oder mehreren der Gase in das Grundwasser eingeleitet wird.

8. Verfahren nach einem oder mehreren der Ansprüche 1 bis 7, dadurch gekennzeichnet, daß die Verweilzeit der in den Grundwasserleiter eingeleiteten Gase bis zur Entnahmestelle mindestens 4,5 Stunden beträgt.

9. Verwendung einer Vorrichtung zur Durchführung des Verfahrens nach den Ansprüchen 1 bis 8, gekennzeichnet durch eine Gaslanze (2, 6) mit einer gasdichten, druckfesten Kappe (4) und Gasanschlüssen.

10. Verwendung einer Vorrichtung nach Anspruch 9, dadurch gekennzeichnet, daß an der Austrittsöffnung der Gaslanze (2, 6) ein Membranfilter (3) angeordnet ist.

11. Verwendung einer Vorrichtung nach Anspruch 9 oder 10, dadurch gekennzeichnet, daß an der Austrittsöffnung der Gaslanze (2, 6) eine Sintermetallplatte (3) angeordnet ist.

12. Verwendung einer Vorrichtung nach einem der Ansprüche 9 bis 11, dadurch gekennzeichnet, daß mehrere Lanzen (17) zum Einspeisen von Gas, Nährlösung und Wasser einzeln oder im Gemisch über jeweils ein pneumatisch oder elektrisch gesteuertes Dosierventil (18) an einen Mischer (19) angeschlossen sind.

13. Verwendung einer Vorrichtung nach einem der Ansprüche, 8 bis 12, dadurch gekennzeichnet, daß die Lanzen in unterschiedlicher Höhe in die Grundwasserschicht eintauchen.

## Claims

1. A process for continuous microbiological denitrification of groundwater by means of natural gas, characterised in that the natural gas is introduced direct into the groundwater carrier upstream of the groundwater takeoff point.

2. A process according to claim 1, characterised in that carbon dioxide is introduced together with the natural gas.

3. A process according to claim 1 or claim 2, characterised in that oxygen is introduced before the groundwater takeoff point either upstream or downstream of the natural gas feeding point.

4. A process according to claim 1 or claim 2, characterised in that upstream of the groundwater takeoff point oxygen and natural gas are introduced separately into the groundwater at a common feeding point and are mixed together in the groundwater at the feeding point.

5. A process according to any one of claims 1 to 4, characterised in that the natural gas is introduced intermittently.

6. A process according to any one of claims 1 to 5, characterised in that phosphate solution is introduced

into the groundwater as such and/or with the oxygen.

**7.** A process according to any one of claims 1 to 6, characterised in that a nutrient solution is introduced into the ground water as such or mixed with one or more of the gases.

**8.** A process according to any one or more of claims 1 to 7, characterised in that the residence time of the gases introduced into the groundwater carrier up to the takeoff point amounts to at least 4.5 hours.

**9.** The use of an apparatus for carrying out the process according to claims 1 to 8, characterised by a gas lance (2, 6) having a gas-tight and pressure-tight cap (4) and gas connections.

**10.** The use of an apparatus according to claim 9, characterised in that a membrane filter (3) is arranged at the outlet opening of the gas lance (2, 6).

**11.** The use of an apparatus according to claim 9 or claim 10, characterised in that a sintered metal plate (3) is arranged at the outlet opening of the gas lance (2, 6).

**12.** The use of an apparatus according to any one of claims 9 to 11, characterised in that a multiplicity of lances (17) for feeding in gas, nutrient solution and water, individually or as a mixture, are connected, each by way of a respective pneumatic or electrically controlled metering valve (18), to a mixer (19).

**13.** The use of an apparatus according to any one of claims 8 to 12, characterised in that the lances penetrate into the groundwater layer to different depths.

**Revendications**

**1.** Procédé pour la dénitrification microbiologique continue des eaux souterraines à l'aide de gaz naturel,
caractérisé en ce qu'on introduit le gaz naturel en amont du point de captage d'eau souterraine, directement dans le conduit d'eau souterraine.

**2.** Procédé selon la revendication 1,
caractérisé en ce qu'on introduit du dioxyde de carbone avec le gaz naturel.

**3.** Procédé selon la revendication 1 ou 2,
caractérisé en ce qu'on introduit l'oxygène en amont et/ou en aval du point d'injection de gaz naturel, en amont du point de captage d'eau souterraine.

**4.** Procédé selon la revendication 1 ou 2,
caractérisé en ce qu'on introduit, en amont du point de captage d'eau souterraine, de l'oxygène et du gaz naturel séparément en un point d'injection commun dans l'eau souterraine et en ce qu'on les mélange l'un à l'autre dans l'eau souterraine, au point d'injection.

**5.** Procédé selon l'une des revendications 1 à 4
caractérisé en ce qu'on injecte le gaz naturel par intermittence

**6.** Procédé selon l'une des revendications 1 à 5
caractérisé en ce qu'on introduit une solution de phosphate individuellement et/ou avec l'oxygène dans l'eau souterraine.

**7.** Procédé selon l'une des revendications 1 à 6
caractérisé en ce qu'on introduit une solution nutritive individuellement ou en mélange avec l'un ou plusieurs des gaz dans l'eau souterraine.

**8.** Procédé selon l'une des revendications 1 à 7
caractérisé en ce que le temps de séjour des gaz introduits dans le conduit d'eau souterraine est au moins de 4,5 heures jusqu'au point de captage.

**9.** Utilisation d'une installation pour la mise en oeuvre du procédé selon les revendications 1 à 8,

caractérisée par une lance à gaz (2, 6) comportant un bouchon étanche au gaz et résistant à la pression (4) et des raccordements pour les gaz.

**10.** Utilisation d'une installation selon la revendication 9,
caractérisée en ce qu'un filtre à diaphragme (3) est agencé à l'ouverture de sortie de la lance à gaz (2, 6).

**11.** Utilisation d'une installation selon la revendication 9 ou 10,
caractérisée en ce qu'une plaque en métal (3) est agencée à l'ouverture de sortie de la lance à gaz (2, 6).

**12.** Utilisation d'une installation selon l'une des revendications 9 à 11,
caractérisée en ce que plusieurs lances (17) sont raccordées via chaque fois une vanne de dosage (18) commandée pneumatiquement ou électriquement à un mélangeur (19), en vue de l'injection de gaz, de solution nutritive et d'eau individuellement ou en mélange.

**13.** Utilisation d'une installation selon l'une des revendications 8 à 12,
caractérisée en ce que les lances pénètrent à des niveaux différents dans la couche d'eaux souterraine.

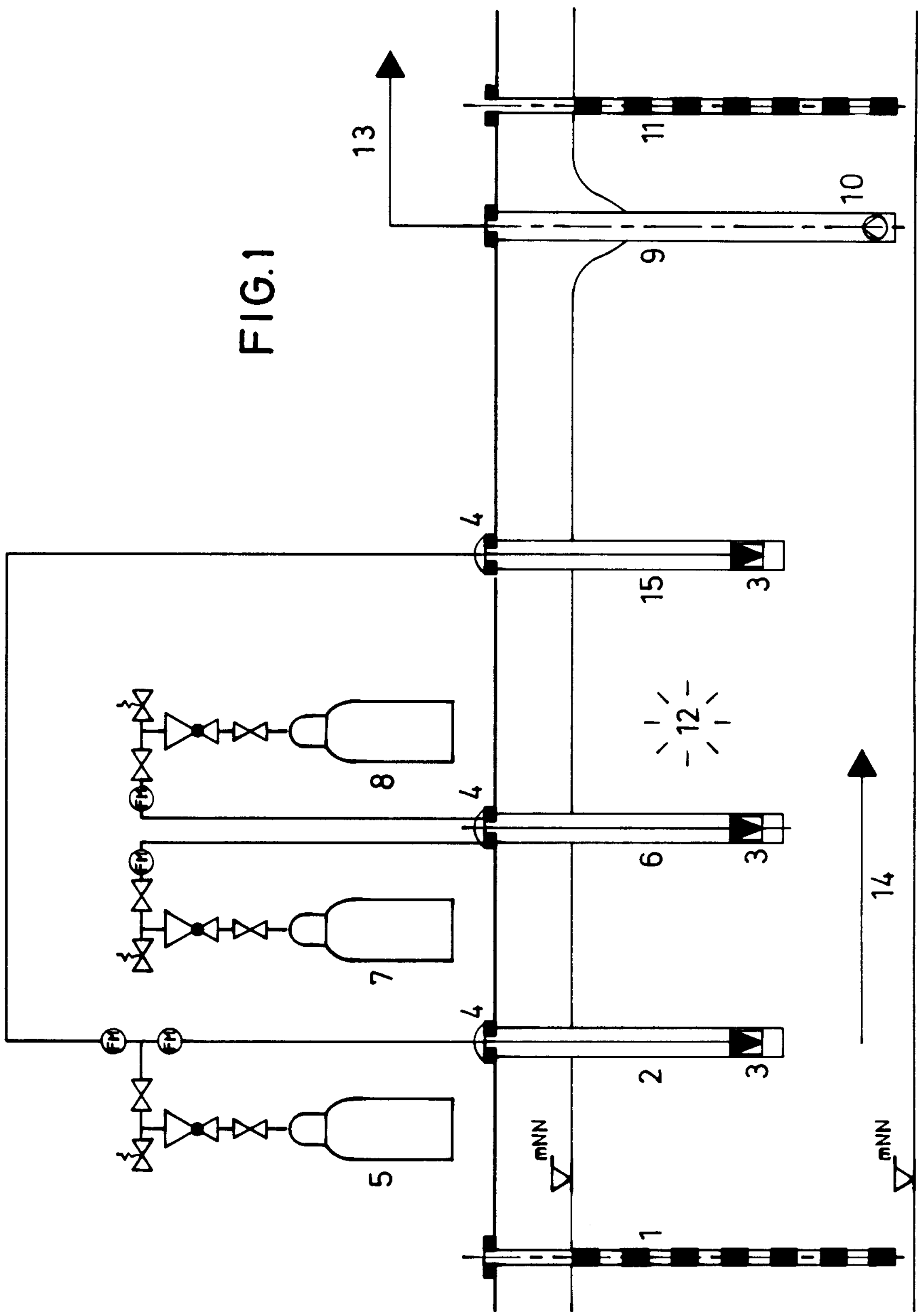
FIG.1
1
2
3
4
5
6
7
8
9
10
11
12
13
14
15
FM
mNN

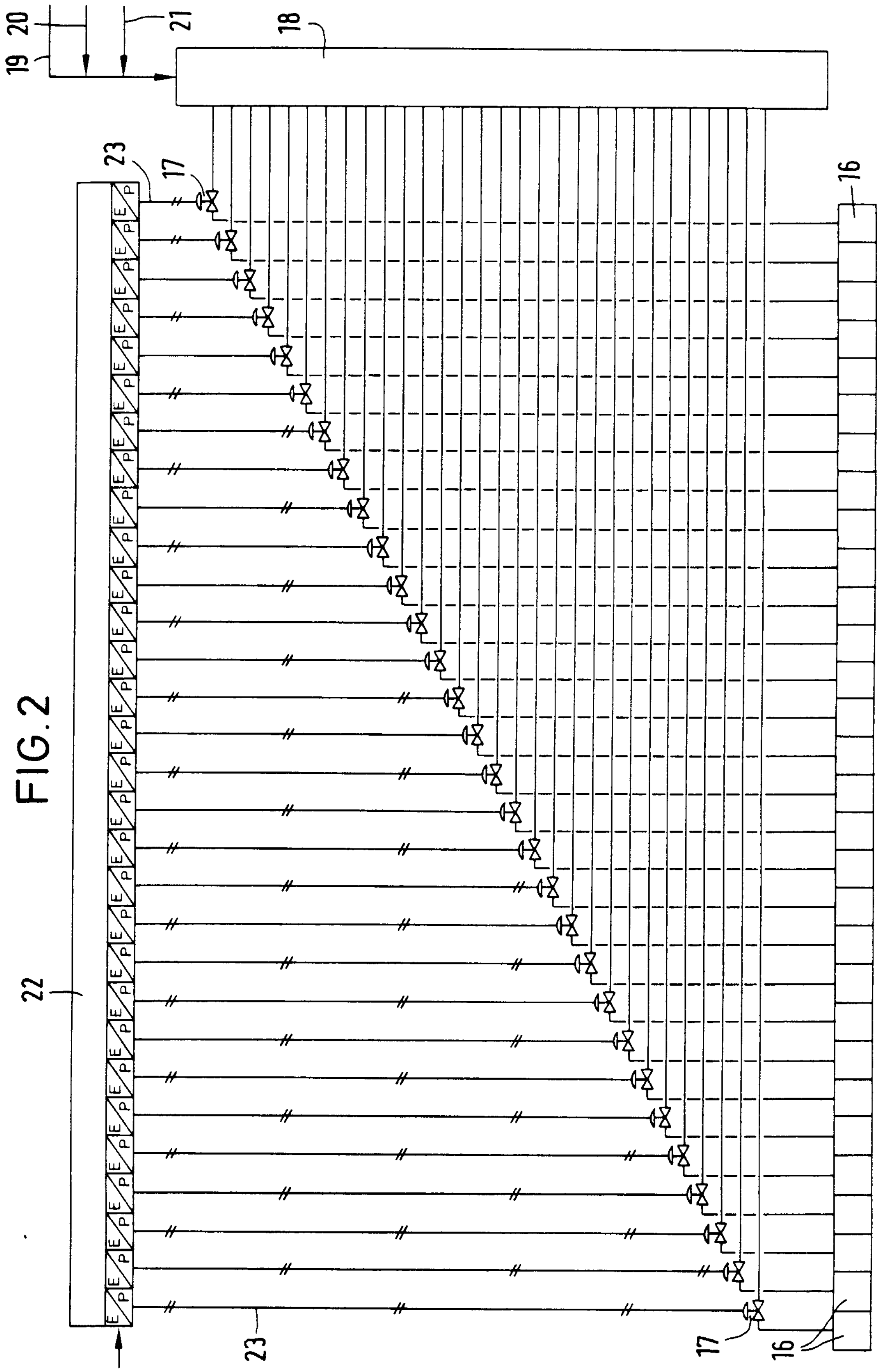


FIG. 2